Europäisches Patentamt

European Patent Office

Office européen des brevets

(19)

(11) EP 0 759 959 B1

(12) EUROPEAN PATENT SPECIFICATION

(45) Date of publication and mention
of the grant of the patent:
**17.06.1998 Bulletin 1998/25**

(21) Application number: **95916666.1**

(22) Date of filing: **15.04.1995**

(51) Int Cl.$^6$: **C09C 1/30**, C09D 7/00

(86) International application number:
**PCT/EP95/01431**

(87) International publication number:
**WO 95/31508 (23.11.1995 Gazette 1995/50)**

(54) **WAX COATED SILICA MATTING AGENT**

MIT WACHS BESCHICHTETE KIESELSÄURE ALS MATTIERUNGSMITTEL

AGENT MATANT A BASE DE SILICE ENROBE DE CIRE

(84) Designated Contracting States:
**AT BE CH DE DK ES FR GB GR IE IT LI NL PT SE**

(30) Priority: **11.05.1994 GB 9409388**

(43) Date of publication of application:
**05.03.1997 Bulletin 1997/10**

(73) Proprietor: **CROSFIELD LIMITED**
**Warrington, Cheshire WA5 1AB (GB)**

(72) Inventors:
• **ALDCROFT, Derek**
 **South Wirral, Cheshire L66 2YZ (GB)**
• **EARL, Graham, James**
 **Winsford, Cheshire CW7 1SE (GB)**

(74) Representative:
**Collingwood, Anthony Robert et al**
**ICI Group Intellectual Property**
**P.O. Box 11**
**The Heath**
**Runcorn Cheshire WA7 4QE (GB)**

(56) References cited:
**EP-A- 0 341 383**        **EP-A- 0 541 359**
**EP-A- 0 588 497**        **GB-A- 798 621**
**US-A- 4 097 302**

## Description

The invention relates to wax coated silica matting agents which are widely used in the surface coatings industry to reduce gloss but also to enhance film properties such as feel, scratch resistance and flexibility.

### BACKGROUND TO THE INVENTION

It is well known that micronised waxes will impart these desirable features to the paint or lacquer film. However, when a silica is coated/impregnated with the wax a process usually performed by jointly grinding the silica and wax in a fluid energy mill (microniser), further product benefits are immediately available. The mixed phenomenon of coating and impregnating, resulting from the inherent porosity of the silica, is hereinafter referred to as "coating". The wax can improve compatibility of the silica with the paint or lacquer preventing interaction with other components in the formulation. On the other hand, coating a silica with a wax can have a detrimental effect on the matting properties of the silica. In other respects, when introduced into structured paints or varnishes, the coated matting agent can also destroy the thixotropy of the system.

It is known from EP-A-541,359 that silica matting agents coated with a mixture of a hard microcrystalline wax, a plasticizing microcrystalline wax and a synthetic polyethylene wax can prevent the formation of a non redispersible hard sediment during storage.

Thus there is a need for a wax coated silica with matting properties at least as good as, and preferably better than, the matting properties of a naked silica.

Therefore it is a first goal of the present invention to provide a coated silica with matting properties which are better than the matting properties of the naked silica.

It is a second goal of the present invention to provide a process for manufacturing such coated silica.

It is a third goal of the present invention to provide paints and lacquers containing said coated silica.

It has now been found that a silica with a specific pore size distribution and a specific surface area can be coated with a specific wax in order to get matting properties previously unknown for a coated silica, when dispersed in low viscosity and low bodied thixotropic paint or varnishes such as thixotropic wood lacquers.

### GENERAL DESCRIPTION OF THE INVENTION

The present invention relates to a wax coated silica matting agent characterised in that the silica is an amorphous silica having a pore size distribution wherein 90% of the pores have a diameter above 15 nanometers, and less than 20% of the pore volume is in pores having a pore diameter between 10 and 30 nanometers, the wax coating being present in the range from about 2% to about 15% by weight of the matting agent and comprising a hard microcrystalline wax, a plasticising microcrystalline wax, a synthetic polyethylene wax or a mixture thereof.

Plasticising microcrystalline waxes have melting points in the range 70 to 85°C, a needle penetration (25°C) of from 1.5 to 3.0 mm, and is exemplified by the grades Ultraflex®, Victory® and Besquare® 175 available from Petrolite. The hard microcrystalline waxes have melting points in the range 90 to 95°C, a needle penetration (25°C) of from 0.4 to 0.8 mm and are typified by Crown® 700 from Petrolite, Cerit® HOT from Cerilite SA, Brazil and Lunacerin[R] H193 from H.P.Fuller, Germany. The synthetic polyethylene wax has a melting point in the range 110 to 140°C, a molecular weight of 1000 to 4000, and is exemplified by the grades Polywax® 1000 and Polywax® 2000 available from Petrolite.

Preferably, the wax coating comprises

i. from about 50% to about 90% by weight of a hard microcrystalline wax,

ii. from about 5% to about 30% by weight of a plasticising microcrystalline wax, and

iii. from about 5% to about 20% by weight of a synthetic polyethylene wax.

Such a wax coating is described in EP-A-0541359 included in the present description by reference.

Preferably, the amorphous silica has a matting efficiency of below 20 gloss units at an incidence angle of 60° and a loading of 5% by weight in a high viscosity thixotropic system.

Preferably, the amorphous silica has a CTAB surface area of less than 100 $m^2/g$.

The amorphous silica is manufactured in a process in which, in a first step, sulphuric acid is added to, or mixed with, a sodium silicate solution having a $SiO_2:Na_2O$ ratio of between 3.1 and 3.4 to form a slurry, after this first step the degree of neutralisation being between 50% and 88% and the $SiO_2$ concentration being between 6.5% and 7.5% by weight, the temperature of the slurry being maintained below 100°C and above 85°C, sulphuric acid being afterwards added to reach a pH of about 4, the resulting silica being then washed and dried.

Preferably, after the first acid addition, sodium chloride is added to reach an NaCl:SiO2 ratio of 0.25:1 and 1:1. Preferably also, after the first acid addition the slurry is aged, at a temperature above 85°C, for a period of between 10 to 60 minutes.

It is therefore a second object of the present invention to provide a process for manufacturing a wax coated amorphous silica in which the components of the wax coating are blended by melting, milled to a particle size comparable with the amorphous silica, mixed with the silica in an amount of about 2% to about 15% by weight of the mixture which is then milled in a fluid energy mill to provide a wax coated silica product wherein the amorphous silica is manufactured in a process in which, in a first step, sulphuric acid is added to, or mixed with, a sodium silicate solution having a SiO2: Na2O ratio of between 3.1 and 3.4 to form a slurry, after this first step the degree of neutralisation being between 50% and 88% and the SiO2 concentration being between 6.5% and 7.5% by weight, the temperature of the slurry being maintained below 100°C and above 85°C, sulphuric acid being afterwards added to reach a pH of about 4, the resulting silica being then washed and dried and optionally micronised.

Definitions and Test Procedures

i. Nitrogen surface area - pore volume

Nitrogen surface area is determined by standard nitrogen adsorption methods of Brunauer, Emmett and Teller (BET) using a multi point method with an ASAP 2400 apparatus supplied by Micromeritics of the U.S.A.. The samples are outgassed under vacuum at 270°C for at least one hour before measurement. Surface area is calculated from the volume of nitrogen gas adsorbed at p/po 0.98. This apparatus also provides the pore size distribution from which it is possible to get the pore size ($D_{10}$) for which 10% of the pores are below this pore size. In the same manner, it is possible to get the pore size for which 50% ($D_{50}$) and 90% ($D_{90}$) of the pores are below this pore size . Additionally the pore volume ($cm^3$/g) for a given range of pore size can be obtained from the desorption curve.

ii. Matting efficiency in high viscosity thixotropic system

The matting efficiency of a silica flatting agent is determined by dispersing the silica in a polyamide-modified alkyd resin, drawing a film on a glass plate, and allowing to air dry at room temperature in a dust free atmosphere. The plates are then measured for matting efficiency at 60° and 85° incidence angle using a BYK multi glossmeter.

| Formulation of thixotropic resin | |
| --- | --- |
| | Parts by weight |
| Rutile Titania | 28.4 |
| Synolac 60W (*) | 22.1 |
| Gelkyd 320W (*) | 39.0 |
| White spirit | 9.3 |
| 10% Calcium carboxylate | 0.7 |
| 12% Cobalt octoate | 0.2 |
| 24% Zirconium carboxylate | 0.2 |
| Methyl ethyl ketoxime | 0.9 |

(*) Synolac 60W and Gelkyd 320W can be obtained from Cray Valley Products.

This formulation, in the absence of silica matting agent, gave gloss readings of 82 and 92 at angles of incidence of 60° and 85° respectively. The viscosity of this formulation was 20,768 mPa.s at 24 $sec^{-1}$ and 25°C.

The test resin contains a weight percent (3% or 5%) of the silica matting agent as defined in each example.

Into an 8 oz (250 $cm^3$) glass jar weigh 47.5 g of thixotropic resin (formulation above). Using a glass rod stir into the paint an appropriate weight of silica until the powder completely wets out. Following complete wetting stir the system at 1500 rpm for two minutes using a Heidolph stirrer (fitted with a Cowles type head). Draw a film onto a black glass plate (12" x 4") using a 100 µm block applicator and allow to air dry at room temperature, in a dust free atmosphere, over a period of 24 hours. Assess the matting efficiency ( expressed in gloss units) by reading at 60° and 85° incidence angle using a BYK multi glossmeter.

iii. Matting efficiency in a low viscosity system

This matting efficiency was measured as under ii. but instead a thixotropic resin, a low viscosity varnish (1,600 mPa.s) was used in which the silica (coated and naked) was introduced at a loading of 6.5 % by weight based on the weight of the low viscosity varnish.

iv. Degree of neutralisation (DofN)

Knowing the quantity of sodium silicate which is to be neutralised it is possible to calculate the quantity of acid which is needed to complete the neutralisation. The degree of neutralisation must be understood as being the percentage of the required amount of acid which has been introduced at the end of the first acid addition.

v. Weight mean particle size

The weight mean particle size is determined with the aid of a Malvern Mastersizer using 45 mm path length lens. This instrument, made by Malvern Instruments, Worcestershire uses the principle of Fraunhoffer diffraction utilising a low power He/Ne laser. Before measurement the sample was dispersed ultrasonically in water for a period of 7 minutes to form an aqueous suspension. The Malvern Mastersizer measures the weight particle size distribution of the silica. The weight mean particle size ($d_{50}$), the 10 percentile ($d_{10}$) and the 90 percentile ($d_{90}$) are easily obtained from the data generated by the instrument.

vi. CTAB surface area

This method determines the specific surface area of samples, exclusive of area contained in micropores too small to admit hexadecyltrimethyl ammonium bromide (cetyltrimethyl ammonium bromide, commonly referred to as CTAB) molecules.

The isotherm for adsorption of an aqueous solution of CTAB at a charged surface has a long horizontal plateau corresponding to a bilayer coverage of the substrate surface. Rapid equilibration is achieved by using mechanical agitation. Titration with sodium dodecyl sulphate solution is used to determine the unadsorbed CTAB after removal of the dispersed silica by centrifugation.

Into a 50 $cm^3$ screw-cap jar weight between 0.10 and 0.25 g of silica, depending upon surface area to be determined. For high surface areas, which lead to low CTAB titrations, the lower weight is employed. Add 25 $cm^3$ of 0.01 mol.$dm^{-3}$ CTAB solution and bring the pH of the mixture to 9.0 with 0.1 mol.$dm^{-3}$ NaOH solution. Stopper the jar and agitate for 1 hour in a water bath set at 25°C. Settle the suspension centrifugally and transfer 5 $cm^3$ of the supernatant into a 50 $cm^3$ measuring cylinder. Add 10 $cm^3$ of deionised water, 15 $cm^3$ of chloroform, 10 $cm^3$ of mixed indicator solution (dimidium bromide/disulphine blue obtainable from BDH Ltd, Poole, Dorset, England) and titrate with 0.005 mol.$dm^{-3}$ sodium dodecyl sulphate solution, previously calibrated by a standard CTAB solution. The titration end point is that point at which the chloroform layer becomes pale-pink. Record the volume of sodium dodecyl sulphate to reach the end point as $V_2$ $cm^3$. Conduct a blank titration in a similar manner on 5 $cm^3$ of the stock CTAB solution and record the volume of sodium dodecyl sulphate as $V_1$ $cm^3$.

Calculate the CTAB surface per gram of silica by the following equation in which the calculation is based on a molecular cross section of the bromide of 35 $Å^2$:

$$CTAB\ surface\ area = \frac{(V_1 - V_2)\ x\ 5.27}{W}\ x\ (0.5)$$

Where

W = Weight of silica samle (in grams) 0.5 accounts for bi-layer formation.

vii. Wax content of the coated silica

The wax content of the coated silicas is determined by solvent extraction using the Tecator Soxhlet HT2. A known weight of sample is transferred to the "thimble" on the apparatus and extracted with 70 mls of chloroform at reflux for 20 minutes. The thimble is rinsed for 45 minutes, air blown for 5 minutes, removed from the equipment and dried in an air circulated oven at 105°C for 15 mins. The wax content (in % w/w) can be calculated from the weight difference to constant weight.

SPECIFIC DESCRIPTION OF THE INVENTION

The present invention which be further described in the following examples in which examples 1 to 6 describe how to produce an amorphous silica suitable for the present invention whereas example 7 describes a coated silica according to the invention.

### Example 1

A heated stirred reaction vessel was used for the silicate/acid reaction.

Mixing is an important feature in the reaction of silicate and sulphuric acid. Consequently fixed specifications as listed in Chemineer Inc. Chem Eng. April 26th 1976 pages 102-110 have been used to design the baffled heated stirred reaction vessel. Whilst the turbine design is optional to the mixing geometry, a 6-bladed 30° pitched bladed unit has been chosen for the experiments in order to ensure maximum mixing effectiveness with minimum shear.

The solutions used in this Example were as follows:

i) Sodium silicate solution having a $SiO_2$:$Na_2O$ ratio of 3.29:1 and a $SiO_2$ content of 17.2% by weight.

ii) A sulphuric acid solution of specific gravity of 1.12.

No electrolyte solution was added.

13.6 litres of water was placed in the vessel together with 0.12 litres of sodium silicate solution. This mixture was then stirred and heated to 98°C.

11.4 litres of sodium silicate and 4.8 litres of sulphuric acid were then added simultaneously over a period of 20 minutes with stirring whilst maintaining the temperature at 98°C. The flow rates of the silicate and acid solutions were uniform throughout the addition period to ensure that a constant pH of 10 was maintained in the vessel.

Silicate slurry was then aged at pH 10 for 50 minutes at 98°C.

Sulphuric acid was then added over a period of 10 minutes to give a final slurry pH of 4.

The resultant slurry was then filtered and washed with water to remove excess electrolyte, dried and micronised.

### Example 2

The same reaction vessel, with the same stirrer, was used as in Example 1.

The solutions used in this Example were as follows:

i) Sodium silicate solution having a $SiO_2$:$Na_2O$ ratio of 3.29:1 and a $SiO_2$ content of 16.75% by weight.

ii) A sulphuric acid solution of specific gravity of 1.13.

iii) 3.8 litres of a 25% (w/w) sodium chloride solution.

13.6 litres of water was placed in the vessel together with 11.3 litres of sodium silicate solution. This mixture was then stirred and heated to 98°C.

4.89 litres of sulphuric acid was then added over a period of 20 minutes with stirring whilst maintaining the temperature at 98°C. The acid flow rate of the acid solution was uniform throughout the addition period. The final pH after the acid addition was 9.

3.8 litres of a 25% (w/w) sodium chloride solution was then added over 18 minutes, the temperature being maintained at 98°C.

Sulphuric acid was then added over a period of 10 minutes to give a final slurry pH of 4.

The resultant slurry was then filtered and washed with water to remove excess electrolyte, dried and micronised.

### Example 3

The same reaction vessel, with the same stirrer, was used as in Example 1.

The solutions used in this Example were as follows:

i) Sodium silicate solution having a $SiO_2$:$Na_2O$ ratio of 3.29:1 and a $SiO_2$ content of 17.2% by weight.

ii) A sulphuric acid solution of specific gravity of 1.12.

13.6 litres of water was placed in the vessel together with 11.5 litres of sodium silicate solution. This mixture was then stirred and heated to 98°C.

4.84 litres of sulphuric acid was then added over a period of 20 minutes with stirring whilst maintaining the temperature at 98°C. The acid flow rate of the acid solution was uniform throughout the addition period. The final pH after the acid addition was 11.

The slurry was then aged over a period of 20 minutes at a temperature of 98°C.
Sulphuric acid was then added over a period of 10 minutes to give a final slurry pH of 4.
The resultant slurry was then filtered and washed with water to remove excess electrolyte, dried and micronised.

Example 4

A larger reaction vessel than the one used in Example 1 but with the same configuration of the vessel geometry, baffles and stirrer was used.
The solutions used in this Example were as follows:

i) Sodium silicate solution having a SiO2:Na2O ratio of 3.28:1 and a SiO2 content of 16.62% by weight.

ii) A sulphuric acid solution of specific gravity of 1.12.

iii) 40 litres of a 25% (w/w) sodium chloride solution.

83.5 litres of water was placed in the vessel together with 80.2 litres of sodium silicate solution. This mixture was then stirred and heated to 98°C.
27.96 litres of sulphuric acid was then added over a period of 20 minutes with stirring whilst maintaining the temperature at 98°C. The acid flow rate of the acid solution was uniform throughout the addition period.
40 litres of a 25% (w/w) sodium chloride solution was then added over 15 minutes, the temperature being maintained at 98°C.
Sulphuric acid was then added over a period of 10 minutes to give a final slurry pH of 4.
The resultant slurry was then filtered and washed with water to remove excess electrolyte, dried and micronised.

Example 5

The same reaction vessel, with the same stirrer, was used as in Example 1.
The solutions used in this Example were as follows:

i) Sodium silicate solution having a SiO2:Na2O ratio of 3.25:1 and a SiO2 content of 17.1% by weight.

ii) A sulphuric acid solution of specific gravity of 1.13.

iii) 4.0 litres of a 25% (w/w) sodium chloride solution.

13.35 litres of water was placed in the vessel together with 11.6 litres of sodium silicate solution. This mixture was then stirred and heated to 98°C.
5.03 litres of sulphuric acid was then added over a period of 20 minutes with stirring whilst maintaining the temperature at 98°C. The acid flow rate of the acid solution was uniform throughout the addition period.
4.0 litres of a 25% (w/w) sodium chloride solution was then added over 18 minutes, the temperature being maintained at 98°C.
The slurry was then aged during 10 minutes at 98°C.
Sulphuric acid was then added over a period of 10 minutes to give a final slurry pH of 4.
The resultant slurry was then filtered and washed with water to remove excess electrolyte dried and micronised.
The physical properties of Examples 1 to 5 are summarised in the following Table 1 wherein:

- S.A. = Surface Area to nitrogen ($m^2/g$)

- P.V. = Total Pore Volume to nitrogen ($cm^3/g$) (of pores with pore diameter between 1.7 and 300 nm)

- P.V.(10-30) = Pore Volume to nitrogen of pores having a diameter between 10 and 30 nm. ($cm^3/g$)

-

$$X = 100 \times \frac{P.V.(10\text{-}30)}{P.V.}$$

- Pore size distribution: $D_{10}$, $D_{50}$, $D_{90}$ in nanometers as above defined in "Definitions and Test procedures" section i).

- M.E. at 60° = Matting efficiency at 60° at 5% loading (in gloss units) in high viscosity thixotropic system

- M.E. at 85° = Matting efficiency at 85° at 5% loading (in gloss units) in high viscosity thixotropic system

- $d_{10}$ , $d_{50}$, $d_{90}$ = percentiles of the particle size distribution (microns) after drying and micronization,

- S = Surface Area to CTAB ($m^2/g$)

- NM means that the parameter was not measured

TABLE 1

| Example | 1 | 2 | 3 | 4 | 5 |
|---|---|---|---|---|---|
| S.A.($m^2/g$) | 177 | 209 | 215 | 230 | NM |
| P.V. ($cm^3/g$) | 1.09 | 1.31 | 0.91 | 1.78 | NM |
| P.V.(10-30) ($cm^3/g$) | 0.13 | 0.20 | 0.16 | 0.19 | NM |
| X | 11.9 | 15.4 | 17.6 | 10.7 | NM |
| S ($m^2/g$) | 55 | 82 | 77 | 74 | 70 |
| $D_{10}$ (nm) | 22 | 21 | 16 | 28 | NM |
| $D_{50}$ (nm) | 60 | 50 | 50 | 60 | NM |
| $D_{90}$ (nm) | >100 | >100 | >100 | >100 | NM |
| M.E. at 60° | 15 | 6 | 6 | 11 | 7 |
| M.E. at 85° | 36 | 10 | 10 | 26 | 12 |
| $d_{10}$ ($\mu m$) | 2.6 | 3.7 | 4.0 | 3.0 | 4.1 |
| $d_{50}$ ($\mu m$) | 5.8 | 7.4 | 7.6 | 6.9 | 7.1 |
| $d_{90}$ ($\mu m$) | 12.8 | 14.9 | 14.3 | 14.6 | 20.3 |

Example 6

A number of preparations have been made, altering the temperature, the percentage SiO2 of the sol after the first acid addition, the Degree of Neutralization, the NaCl:SiO2 ratio and the ageing time.

Preparations are based upon a sol volume of 30 litres, the sol consisting of water, sodium silicate and first acid addition. The method of addition being according to Example 2 or 5 depending on the presence of an ageing step of 10 minutes.

The results are summarised in the following Table 2 wherein.

- $SiO_2$(%) represents the $SiO_2$ concentration in percent by weight at the end of the first acid addition,

- DofN represents the Degree of Neutralization,

- $NaCl:SiO_2$ represents the weight ratio of NaCl and $SiO_2$,

- M.E. at 60° = Matting efficiency at 60° at 3% loading (in gloss units) in high viscosity thixotropic system

- M.E. at 85° = Matting efficiency at 85° at 3% loading (in gloss units) in high viscosity thixotropic system

- $d_{10}$ , $d_{50}$, $d_{90}$ = percentiles of the particle size distribution (microns) after drying and micronization.

- S = Surface Area to CTAB ($m^2/g$)

- NM means that the parameter was not measured,

**TABLE 2**

| Sample | 1 | 2 | 3 | 4 | 5 |
|---|---|---|---|---|---|
| Temperature (°C) | 80 | 80 | 80 | 80 | 88 |
| $SiO_2$ (%) | 6.6 | 7.3 | 7.3 | 7.3 | 7.0 |
| 10 minutes Ageing | Yes | No | No | Yes | No |
| DofN (%) | 70 | 70 | 84 | 84 | 84 |
| $NaCl:SiO_2$ | 1:1 | 1:1 | 0.5:1 | 1:1 | 1:1 |
| $d_{10}$ (μm) | 4.6 | 4.5 | 3.1 | 3.8 | 2.7 |
| $d_{50}$ (μm) | 8.6 | 9.1 | 5.9 | 8.0 | 4.8 |
| $d_{90}$ (μm) | 16.5 | 19.4 | 12.0 | 16.9 | 8.2 |
| M.E. 60° | 13 | 12 | 20 | 18 | 19 |
| M.E. 85° | 20 | 16 | 45 | 36 | 56 |
| S (m²/g) | 150 | 116 | 134 | | |

**TABLE 2 (CONTINUED)**

| Sample | 6 | 7 | 8 | 9 |
|---|---|---|---|---|
| Temperature (°C) | 98 | 98 | 98 | 98 |
| $SiO_2$ (%) | 6.6 | 7.0 | 7.3 | 7.3 |
| 10 minutes Ageing | Yes | No | No | Yes |
| DofN (%) | 84 | 84 | 84 | 70 |
| $NaCl:SiO_2$ | 1:1 | 0.5:1 | 1:1 | 1:1 |
| $d_{10}$ (μm) | 3.2 | 3.7 | 3.2 | 4.1 |
| $d_{50}$ (μm) | 6.6 | 7.4 | 6.0 | 9.5 |
| $d_{90}$ (μm) | 13.7 | 14.9 | 10.6 | 21.0 |
| M.E. 60° | 15 | 14 | 15 | 19 |
| M.E. 85° | 42 | 30 | 38 | 26 |

Example 7

A slurry as obtained under Example 4 was eventually, filtered dried and micronised in order to provide an amorphous silica having the following particle size distribution:

- $d_{10}$ : 4.0μm
- $d_{50}$ : 8.6μm
- $d_{90}$ :16.4μm

This silica was coated at two levels with microcrsytalline wax (Crown Wax) and a ternary wax blend according to EP-A-0,541,359 (Kerawax 2773P).

The Matting Efficiency of the naked silica as well as the coated silica was measured in a low viscosity system. The results are summarized in the following table in which:

- M.E. at 60° = Matting efficiency at 60° at 6.5% loading in low viscosity system (in gloss units)
- M.E. at 85° = Matting efficiency at 85° at 6.5% loading in low viscosity system (in gloss units)

| | M.E. 60° | M.E. 85° |
|---|---|---|
| Naked silica | 53 | 69 |
| Silica + 3.3 % Crown wax (*) | 21 | 32 |
| Silica + 6.9 % Crown wax (*) | 24 | 38 |
| Silica + 3.3 % Kerawax 2773P (**) | 12 | 15 |
| Silica + 6.9% Kerawax 2773P (**) | 12 | 15 |

(*) Crown wax is a microcrystaline wax obtainable from Petrolite

(**) Commercially available from Kerax - England

It is clear that, contrary to the prior art, the coated silica exhibits matting properties which are better than the matting properties of the naked silica. In other respects, the best results in term of matting properties are obtained using a ternary wax blend as disclosed in EP-A-0,541,359.

## Claims

1. Wax coated silica matting agent characterised in that the silica is an amorphous silica having a pore size distribution wherein 90% of the pores have a diameter above 15 nanometers, and less than 20% of the pore volume is in pores having a pore diameter between 10 and 30 nanometers, the wax coating being present in the range from about 2% to about 15% by weight of the matting agent and comprising a hard microcrystalline wax, a plasticising microcrystalline wax, a synthetic polyethylene wax or a mixture thereof.

2. Wax coated silica according to claim 1 wherein the wax coating comprises

   i. from about 50% to about 90% by weight of a hard microcrystalline wax,

   ii. from about 5% to about 30% by weight of a plasticising microcrystalline wax, and

   iii. from about 5% to about 20% by weight of a synthetic polyethylene wax.

3. Wax coated silica according to claim 1 or 2 wherein the amorphous silica has a matting efficiency of below 20 gloss units at an incidence angle of 60° and a loading of 5% by weight in a high viscosity thixotropic system.

4. Wax coated silica according to claim 3 wherein the amorphous silica has a CTAB surface area of less than 100 $m^2$/g.

5. Process for manufacturing a wax coated amorphous silica according to any of the preceding claims, in which the components of the wax coating are blended by melting, milled to a particle size comparable with the amorphous silica, mixed with the silica in an amount of about 2% to about 15% by weight of the mixture which is then milled in a fluid energy mill to provide a wax coated silica product wherein the amorphous silica is manufactured in a process in which, in a first step, sulphuric acid is added to, or mixed with, a sodium silicate solution having a SiO2: Na2O ratio of between 3.1 and 3.4 to form a slurry, after this first step the degree of neutralisation being between 50% and 88% and the SiO2 concentration being between 6.5% and 7.5% by weight, the temperature of the slurry being maintained below 100°C and above 85°C, sulphuric acid being afterwards added to reach a pH of about 4, the resulting silica being then washed and dried.

## Patentansprüche

1. Mattierungsmittel aus mit Wachs beschichtetem Siliciumdioxid, das dadurch gekennzeichnet ist, daß es sich bei dem Siliciumdioxid um ein amorphes Siliciumdioxid mit einer Porengrößenverteilung handelt, bei der 90% der Poren einen Durchmesser oberhalb 15 nm haben und weniger als 20% des Porenvolumens sich in Poren mit einem Porendurchmesser zwischen 10 und 30 nm befindet, wobei die Wachsbeschichtung im Bereich von etwa 2 Gew.-% bis etwa 15 Gew.-% des Mattierungsmittels vorliegt und ein hartes mikrokristallines Wachs, ein weichmachendes mikrokristallines Wachs, ein synthetisches Polyethylenwachs oder ein Gemisch daraus umfaßt.

2. Wachsbeschichtetes Siliciumdioxid nach Anspruch 1, wobei die Wachsbeschichtung enthält:

    i. etwa 50 Gew.-% bis etwa 90 Gew.-% eines harten mikrokristallinen Wachses,

    ii. etwa 5 Gew.-% bis etwa 30 Gew.-% eines weichmachenden mikrokristallinen Wachses und

    iii. etwa 5 Gew.-% bis etwa 20 Gew.-% eines synthetischen Polyethylenwachses.

3. Wachsbeschichtetes Siliciumdioxid nach Anspruch 1 oder 2, wobei das amorphe Siliciumdioxid eine Mattierungswirkung von unter 20 Glanzeinheiten bei einem Einfallswinkel von 60° und einer Belastung von 5 Gew.-% in einem hochviskosen thixotropen System hat.

4. Wachsbeschichtetes Siliciumdioxid nach Anspruch 3, wobei das amorphe Siliciumdioxid eine CTAB-Oberfläche von weniger als 100 $m^2/g$ hat.

5. Verfahren zur Herstellung eines mit Wachs beschichteten amorphen Siliciumdioxids nach einem der vorhergehenden Ansprüche, wobei die Bestandteile der Wachsbeschichtung durch Schmelzen miteinander vermischt, auf eine mit dem amorphen Siliciumdioxid vergleichbare Teilchengröße zermahlen, mit dem Siliciumdioxid in einer Menge von etwa 2 Gew.-% bis etwa 15 Gew.-% des Gemisches vermischt und dann in einer Strahlmühle zum Erhalt eines mit Wachs beschichteten Siliciumdioxidprodukts vermahlen werden, wobei das amorphe Siliciumdioxid nach einem Verfahren hergestellt wird, bei dem als erster Schritt Schwefelsäure zu einer Natriumsilicatlösung mit einem Verhältnis $SiO_2$:$Na_2O$ zwischen 3,1 und 3,4 zur Bildung einer Aufschlämmung gegeben oder damit vermischt wird, wobei nach diesem ersten Schritt der Neutralisationsgrad zwischen 50% und 88% liegt und die $SiO_2$-Konzentration zwischen 6,5 Gew.-% und 7,5 Gew.-% liegt, die Temperatur der Aufschlämmung unterhalb 100°C und oberhalb 85°C gehalten wird, worauf Schwefelsäure zum Erhalt eines pH-Wertes von etwa 4 hinzugegeben und das sich ergebende Siliciumdioxid dann gewaschen und getrocknet wird.

## Revendications

1. Agent de matité à base de silice enrobée de cire, caractérisé en ce que la silice est une silice amorphe ayant une distribution des tailles des pores dans laquelle 90% des pores ont un diamètre supérieur à 15 nm, et moins de 20% du volume des pores consiste en des pores ayant un diamètre de pores compris entre 10 et 30 nm, l'enrobage de cire étant présent en une proportion d'environ 2% à environ 15% en poids de l'agent de matité et comprenant une cire microcristalline dure, une cire microcristalline plastifiante et une cire de polyéthylène synthétique ou un mélange de celles-ci.

2. Silice enrobée de cire suivant la revendication 1, dans laquelle l'enrobage de cire comprend :

    i. environ 50% à environ 90% en poids d'une cire microcristalline dure;
    ii. environ 5% à environ 30% en poids d'une cire microcristalline plastifiante, et
    iii. environ 5% à environ 20% en poids d'une cire de polyéthylène synthétique.

3. Silice enrobée de cire suivant la revendication 1 ou 2, dans laquelle la silice amorphe a une efficacité de matité inférieure à 20 unités de brillance sous un angle incident de 60° et une charge de 5% en poids dans un système thixotrope de haute viscosité.

**4.** Silice enrobée de cire suivant la revendication 3, dans laquelle la silice amorphe a une surface spécifique CTAB de moins de 100 m$^2$/g.

**5.** Procédé de préparation d'une silice amorphe enrobée de cire suivant l'une quelconque des revendications précédentes, dans lequel les composants de l'enrobage de cire sont mélangés par fusion, broyés à une taille particulaire comparable à la silice amorphe, mélangés à la silice en une quantité d'environ 2% à environ 15% en poids du mélange qui est ensuite broyé dans un broyeur à énergie fluide pour fournir un produit de silice enrobée de cire, dans lequel la silice amorphe est préparée par un procédé dans lequel, dans une première étape, on ajoute, ou on mélange, de l'acide sulfurique à une solution de silicate de sodium ayant un rapport SiO2:Na2O compris entre 3,1 et 3,4 pour former une suspension, le degré de neutralisation après cette première étape étant compris entre 50% et 88% et la concentration en SiO$_2$ étant comprise entre 6,5% et 7,5% en poids, la température de la suspension étant maintenue sous 100°C et au-dessus de 85°C, de l'acide sulfurique étant ensuite ajouté pour atteindre un pH d'environ 4, la silice obtenue étant ensuite lavée et séchée.